# FASCICULE DE BREVET EUROPEEN

(11) **EP 0 434 554 B1**
(45) Date de publication et mention de la délivrance du brevet: **09.03.1994**
(21) Numéro de dépôt: 90403666.2
(22) Date de dépôt: 19.12.1990
(51) Int. Cl.: F17C 9/00, B64G 1/40

(54) **Réservoir à effet capillaire de coque**
Behälter mit Kapillareffekt der Gehäuseschale
Reservoir with capillary effect of the shell

(30) Priorité: 19.12.1989 FR 8916829
(43) Date de publication de la demande: 26.06.1991
(73) Titulaire: SOCIETE EUROPEENNE DE PROPULSION, 92150 Suresnes (FR)
(72) Inventeur: Baralle, Denis Louis, F-27200 Vernon (FR)
(74) Mandataire: Thévenet, Jean-Bruno

(56) Documents cités:
- EP-A- 0 132 175
- FR-A- 2 486 624
- US-A- 3 486 302

## Description

La présente invention a trait à un réservoir de liquides et de gaz, destiné à fonctionner notamment dans des satellites soumis à de faibles accélérations, et utilisant la force de séparation produite par la tension superficielle pour collecter le liquide dans une zone privilégiée du réservoir sans autoriser la sortie de gaz par cette zone.

La localisation des liquides et leur confinement sont en effet deux fonctions très importantes dans le cas de réservoirs fonctionnant en apesanteur où les accélérations sont alors minimales.

Actuellement, les réservoirs de ce type sont équipés intérieurement de dispositifs collecteurs spécifiques destinés à retenir et à puiser les liquides.

La demande de brevet français FR 2 484 961 concerne un réservoir à tension superficielle équipé d'un tel dispositif collecteur. Bien entendu, le dispositif collecteur décrit dans ce document permet de localiser les liquides près de la sortie de liquides prévue dans le réservoir sphérique. Pour ce faire, des canaux s'étendent le long de plans méridiens, à faible distance de la paroi interne du réservoir, et aboutissent par une extrémité dans une chambre collectrice située à proximité immédiate de l'orifice de sortie des liquides. Différentes barrières de gaz (toiles métalliques par exemple) sont prévues au niveau de la chambre collectrice et pour la surface des canaux faisant face à la paroi interne du réservoir.

Un autre dispositif collecteur spécifique est décrit dans la demande de brevet français 2 486 624. Dans ce document, l'intérieur du réservoir sphérique est tapissé de plusieurs lames d'alimentation situées à faible distance de la paroi interne du réservoir, qui aboutissent à un dispositif cylindrique de sortie de liquides. Ce dernier est constitué d'une double structure feuilletée avec des lames internes orientées radialement et des lames externes annulaires, l'ensemble délimitant un passage central coaxial à l'orifice de sortie des liquides.

De façon plus simple, le brevet US-3 486 302 montre un réservoir de stockage renfermant un écran de séparation gaz/liquide, situé à une certaine distance de la paroi interne près de la sortie de vapeur, et à une très faible distance près de la sortie de liquide.

Un autre exemple de dispositif de cloisonnement est illustré par la demande de brevet français FR-2 283 390. Ce document montre en effet un système de cloisonnement multiple situé à l'intérieur du réservoir, sous forme de cloisons disposées en éventail. Une conduite de soutirage de liquide est par ailleurs prévue au niveau du "pied" de l'éventail.

Dans tous les exemples précités, la fonction de puisage est donc réalisée par un dispositif spécifique contenu dans le réservoir dont la forme est préférentiellement sphérique.

La présente invention vise à réaliser un réservoir, de conception plus simple, pouvant collecter les liquides notamment en apesanteur, ou encore un réservoir dont les limites de fonctionnement sont améliorées.

L'invention a notamment pour but de faciliter l'implantation d'un réservoir dans un ensemble tel qu'un satellite, en permettant d'adopter des formes extérieures très diverses, tout en simplifiant la fabrication en utilisant essentiellement des assemblages d'éléments de coques de formes régulières conduisant à une masse réduite dans la mesure où la mise en oeuvre d'un dispositif d'expulsion de liquide (DEL) n'est pas nécessaire.

Ces buts sont atteints conformément à la présente invention grâce à un réservoir du type mentionné en tête de la description caractérisé en ce qu'il comprend :
- un premier élément de coque externe présentant une forme régulière sans ligne ni point anguleux et comprenant à une extrémité une portion de surface S de rayon de courbure r ayant une une forme concave du côté du liquide,
- un second élément de coque interne solidaire dudit premier élément, ayant une forme convexe du côté du liquide, présentant une forme régulière sans ligne ni point anguleux et comprenant une portion de surface S' dont une partie se trouve proche de la tangence avec la portion de surface S dans ladite zone privilégiée qui constitue la zone globalement la plus étroite comprise entre les portions de surface S et S', la portion de surface S' présentant un rayon de courbure r' qui est inférieur au rayon de courbure r au moins au niveau de ladite zone la plus étroite, et
- au moins un élément de soutirage du liquide débouchant dans ladite zone la plus étroite comprise entre les portions de surface S et S', de sorte que le liquide, par un effet capillaire de coque est confiné dans ladite zone la plus étroite entre les premier et second éléments de coque.

Les deux éléments de coque peuvent présenter des formes diverses, dès lors que la continuité de leurs surfaces est respectée, c'est-à-dire qu'ils ne présentent ni ligne ni point anguleux. Ces éléments peuvent par exemple être réalisés à partir d'une forme sphérique ou ellipsoïdale.

Le réservoir peut aussi présenter une forme générale torique.

Dans la mesure où la forme particulière des premier et second éléments de coque définit un système d'expulsion de liquide, sans adjonction d'éléments supplémentaires, la construction du réservoir peut être très simplifiée et sa masse peut être réduite. De plus le réservoir selon l'invention peut conduire à une réduction importante de l'encombrement, notamment lorsqu'il est utilisé en groupe.

Pour permettre des missions plus difficiles, notamment lorsque les accélérations qui tendent à freiner l'expulsion de liquide sont importantes ou lorsqu'il convient de disposer de débits importants, de façon avantageuse mais non nécessaire, le réservoir présentant la configuration spécifique de la présente invention peut en outre comporter un dispositif d'expulsion de liquide placé au voisinage de l'élément de soutirage dans ladite zone la plus étroite.

Un réservoir à effet capillaire de coque selon l'invention muni d'un dispositif d'expulsion de liquide met en oeuvre des forces de capillarité dont la densité est fortement accrue par rapport à celle de la plupart des réservoirs de l'art antérieur.

Le dispositif d'expulsion de liquide peut par exemple être réalisé à partir de tôles perforées orientées radialement vis-à-vis des coques; mais ce dispositif peut encore être constitué de tôles perforées orientées sensiblement parallèlement aux surfaces de la zone de tangence des deux coques.

Les tôles perforées du dispositif d'expulsion de liquide (DEL) viennent renforcer l'effet de capillarité dû à la géométrie du réservoir, ce qui constitue une amélioration notable vis-à-vis des réservoirs équipés de DEL mais dont la forme même ne contribue pas au confinement des liquides.

Sans sortir du cadre de l'invention, le dispositif d'expulsion de liquide peut constituer une combinaison des deux modes de réalisation précités, c'est-à-dire être réalisé à partir d'un enchevêtrement de tôles perforées radiales et circonférentielles orientées selon les deux directions perpendiculaires précitées.

L'écartement des tôles entre elles peut varier: il est alors de plus en plus faible à mesure que l'on s'approche du point de soutirage du liquide.

D'autres caractéristiques et avantages de la présente invention apparaitront mieux à la lecture de la description qui va suivre, faite en référence aux dessins annexés sur lesquels :
- la figure 1 montre en coupe une coque de réservoir selon un premier mode de réalisation de l'invention,
- les figures 2 à 4 et 5A, 5B représentent respectivement les coupes de plusieurs autres formes de réalisation du réservoir selon l'invention,
- les figures 6A et 6B montrent, en coupe selon la ligne VI-VI de la figure 1 un réservoir selon l'invention, la demi-coupe supérieure de la figure 6A montrant un réservor équipé d'un dispositif d'expulsion de liquide à tôles radiales équidistantes et la demi-coupe inférieure de la figure 6B montrant des tôles radiales à écartement variable,
- les figures 7A et 7B montrent une vue en coupe analogue à celle des figures 6A et 6B mais présentent en demi-coupe supérieure sur la figure 7A un réservoir muni de tôles circulaires discontinues, et en demi-coupe inférieure sur la figure 7B un réservoir muni de tôles circulaires continues,
- les figures 8A et 8B montrent une coupe selon la ligne VIII-VIII de la figure 3, qui est analogue à la coupe des figures 6A et 6B mais montrent en partie supérieure sur la figure 8A un dispositif mixte dont les tôles radiales sont équidistantes, tandis que la partie inférieure illustrée sur la figure 8B est pourvue d'un dispositif mixte à tôles radiales à écartement variable,
- les figures 9A, 9B, 9C montrent en coupe le remplissage des différents compartiments d'un dispositif d'expulsion de liquide à tôles radiales non équidistantes,
- la figure 10A montre en coupe le remplissage des différents compartiments d'un dispositif d'expulsion de liquide à tôles radiales équidistantes,
- la figure 10B est une coupe analogue à la demi-coupe supérieure de la figure 6A montrant les évolutions de la longueur des compartiments délimités par des tôles radiales à écartement constant,
- les figures 11 et 12 sont des vues en coupe analogues à celledes figures 7A et 7B mais montrant deux répartitions différentes des tôles circulaires et deux localisations différentes pour le conduit de prélèvement de liquide,
- la figure 13 est une vue en coupe analogue à celle des figures 7A et 7B, mais montrant un conduit de prélèvement de liquide particulier.
- la figure 14 est une vue schématique en coupe montrant deux réservoirs conformes à l'invention imbriqués l'un dans l'autre, et
- la figure 15 est une vue schématique en coupe montrant un réservoir sphérique traditionnel imbriqué dans un réservoir conforme à l'invention.

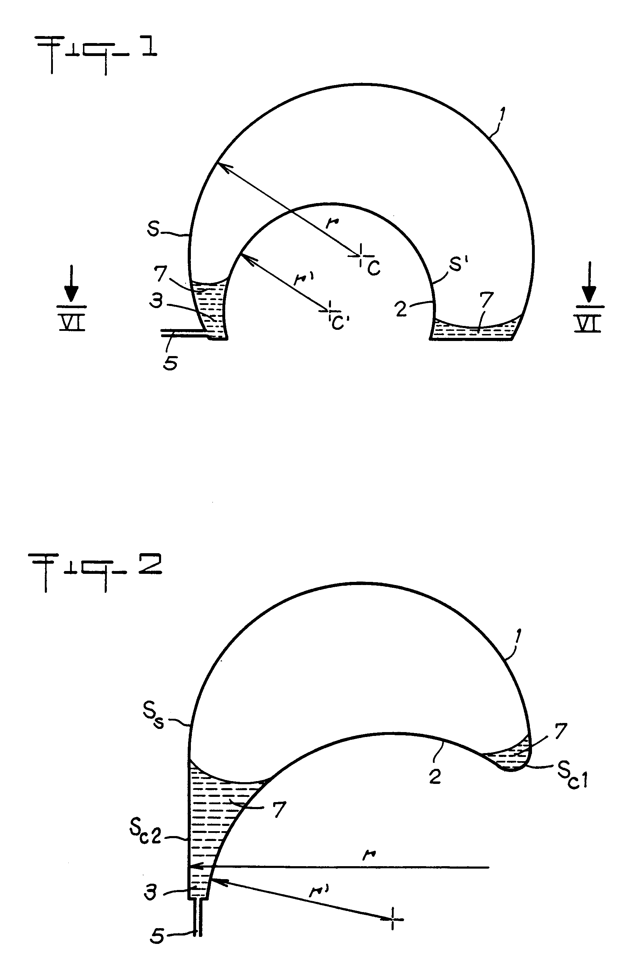

Les figures 1 à 5 montrent chacune un réservoir constitué de deux éléments de coques, l'un 1 extérieur, concave et l'autre 2, intérieur au premier, étant convexe vers l'intérieur du réservoir. Les deux éléments de coque 1, 2 sont disposés de telle sorte qu'ils définissent entre eux une zone 3 dans laquelle ils ont des surfaces S, S' presque tangentes afin de confiner le liquide contenu à l'intérieur du réservoir dans cette zone, par effet capillaire, encore appelé effet de coin. Dans cette zone 3, le rayon de courbure r' de la surface S' est inférieur au rayon de courbure r de la surface S.

Par ailleurs, au moins un élément de soutirage 5 du liquide confiné dans la zone 3 de tangence est prévu. Cet élément 5 en forme de conduit débouche dans la partie la plus étroite de la zone 3 de quasi-tangence entre les coques 1 et 2.

La figure 1 représente un premier mode de réalisation de l'invention dans lequel chacune des coques 1, 2 est sphérique.

Le rayon r' de la sphère intérieure 2 est inférieur au rayon r de la sphère extérieure. Les centres C et C' de chaque sphère ne sont pas confondus afin de réaliser la zone de quasi tangence dans laquelle le liquide sera confiné sous l'effet de la tension superficielle, en cas d'accélération quasi nulle.

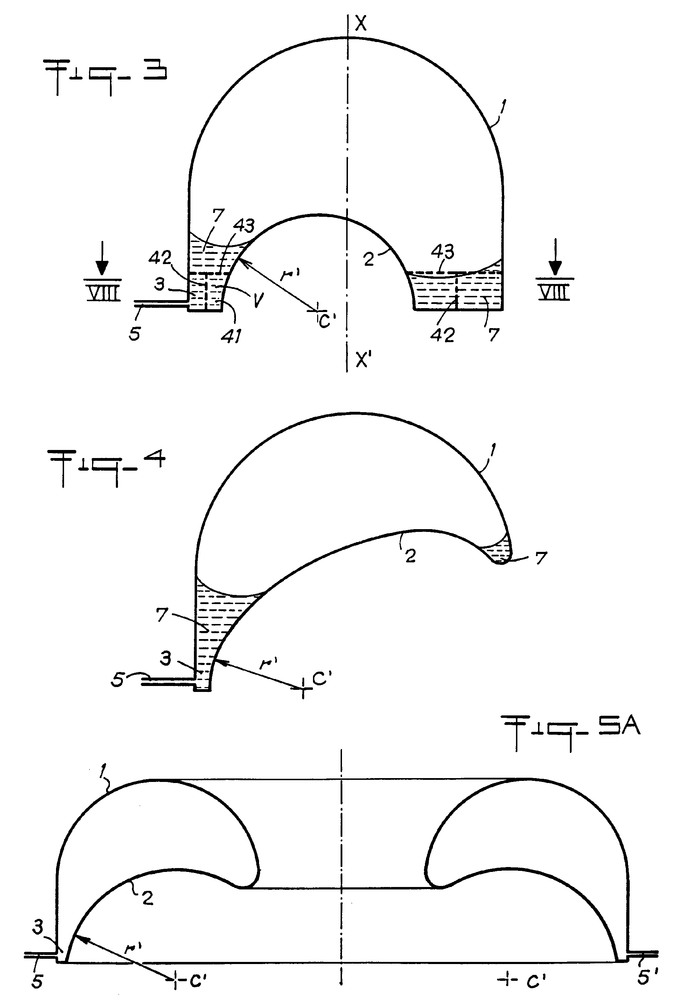

Selon un second mode de réalisation de l'invention représenté sur la figure 2, le premier élément de coque 1 est hémisphérique dans une première partie Sₛ et prolongé à ses deux extrémités par une surface cylindrique S_{c1}, S_{c2}. Le second élément de coque 2 présente une surface sphérique de rayon r' et de centre C'. Une extrémité de cette surface sphérique 2 est raccordée avec l'extrémité inférieure d'une partie de plus petite hauteur de la surface cylindrique S_{c1} du premier élément de coque, tandis que la seconde extrémité de la sphère interne 2 est presque tangente à l'extrémité inférieure d'une partie de plus grande hauteur de la surface cylindrique S_{c2} du premier élément de coque 1, afin de définir la zone 3 de confinement du liquide 7. Bien entendu, dans cette zone, le rayon de courbure r du premier élément de coque 1 étant infini, la caractéristique énoncée ci-dessus relative aux rayons r et r', reste bien vérifiée. Enfin, un élément de soutirage 5 est prévu, débouchant dans la zone la plus étroite de la tangence entre les premier et second éléments de coque 1, 2.

Comme on peut le voir sur la figure 2, la petite surface cylindrique S_{c1} est raccordée à la coque interne 2 de préférence par une petite portion arrondie qui évite la formation d'une jonction anguleuse dans laquelle viendrait se loger un volume de liquide résiduel difficile à puiser.

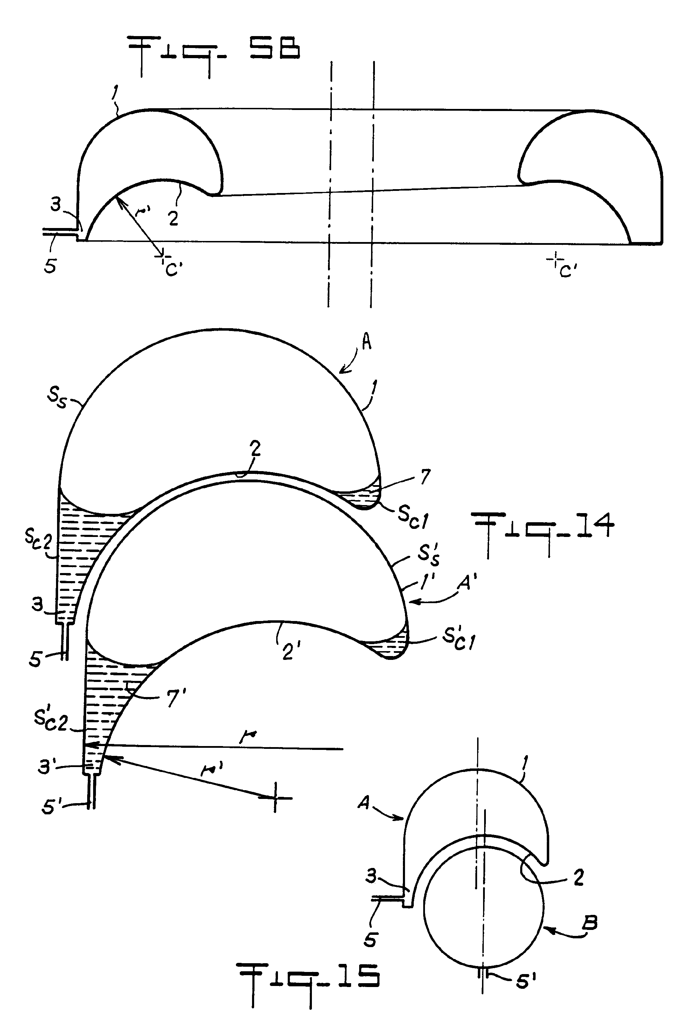

La figure 3 montre un mode de réalisation qui ne diffère de celui représenté sur la figure 2 que par la disposition relative des éléments de coques et le fait que la coque externe 1 est axisymétrique d'axe X X'. La coque interne 2 est une demi-sphère dont le centre ne se trouve pas sur l'axe de symétrie X X' de la première coque 1, ménageant ainsi la zone 3 de quasi-tangence (sur la partie gauche de la figure 3).

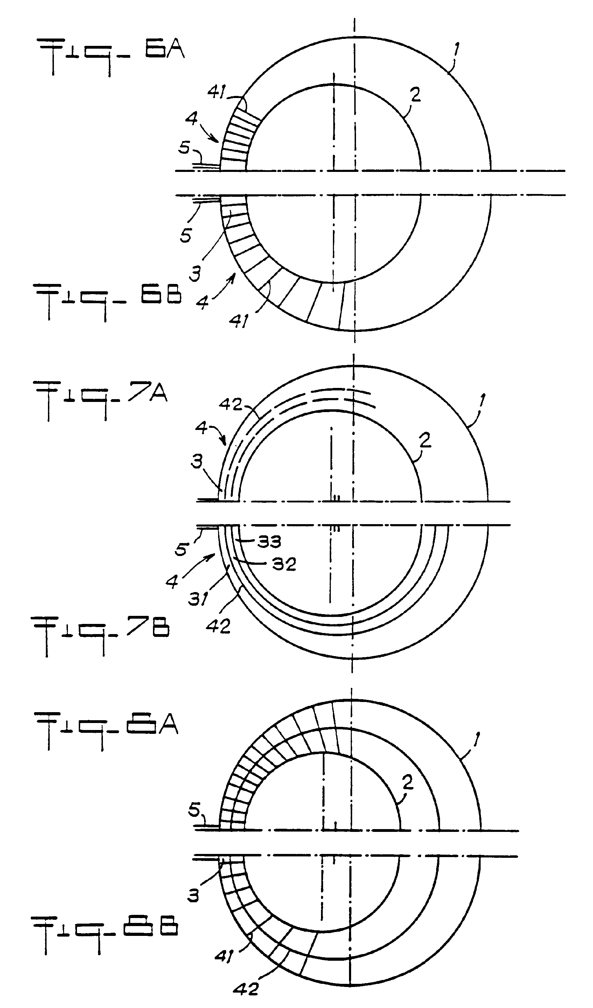

La figure 4 ne diffère de la figure 2 que par la forme de la coque interne 2 qui est, selon ce mode de réalisation, ellipsoïdale.

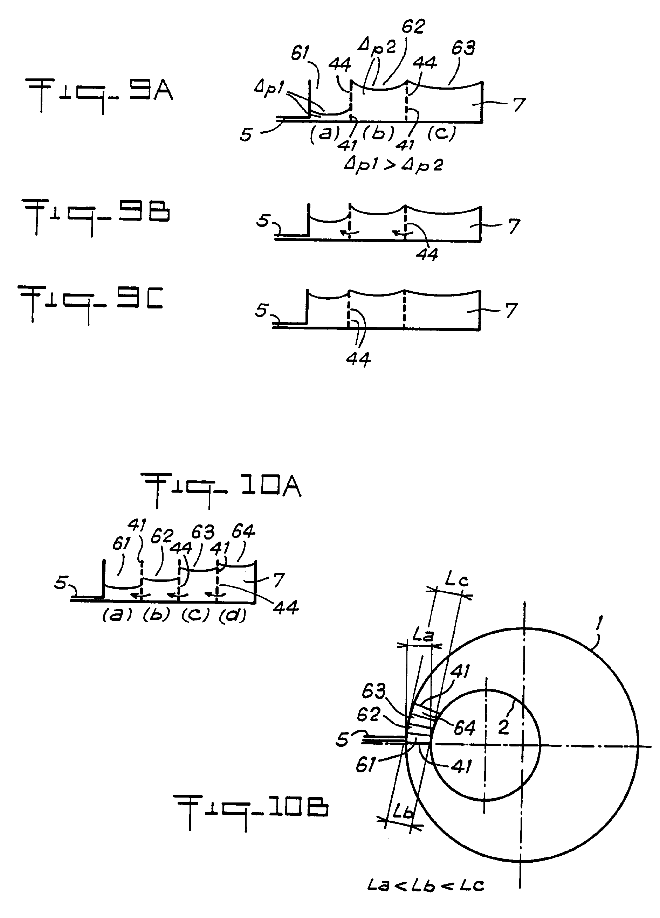

Enfin la figure 5A représente un réservoir de forme générale torique dont chaque demi-section montre par exemple une forme identique à celle de la figure 2. Dans ce cas, plusieurs éléments de soutirage 5, sont nécessaires afin de réaliser une meilleure répartition du soutirage sur l'ensemble du réservoir torique. Il peut toutefois exister un seul conduit de soutirage si le réservoir est réalisé à partir de deux surfaces toriques désaxées, comme représenté sur la variante de la figure 5B.

Comme dans le cas de la figure 2, les réservoirs des figures 4, 5A et 5B présentent de préférence une portion de raccordement interne arrondie entre la coque interne 2, et la coque 1, dans la zone de jonction interne qui ne coopère pas avec un élément de soutirage 5.

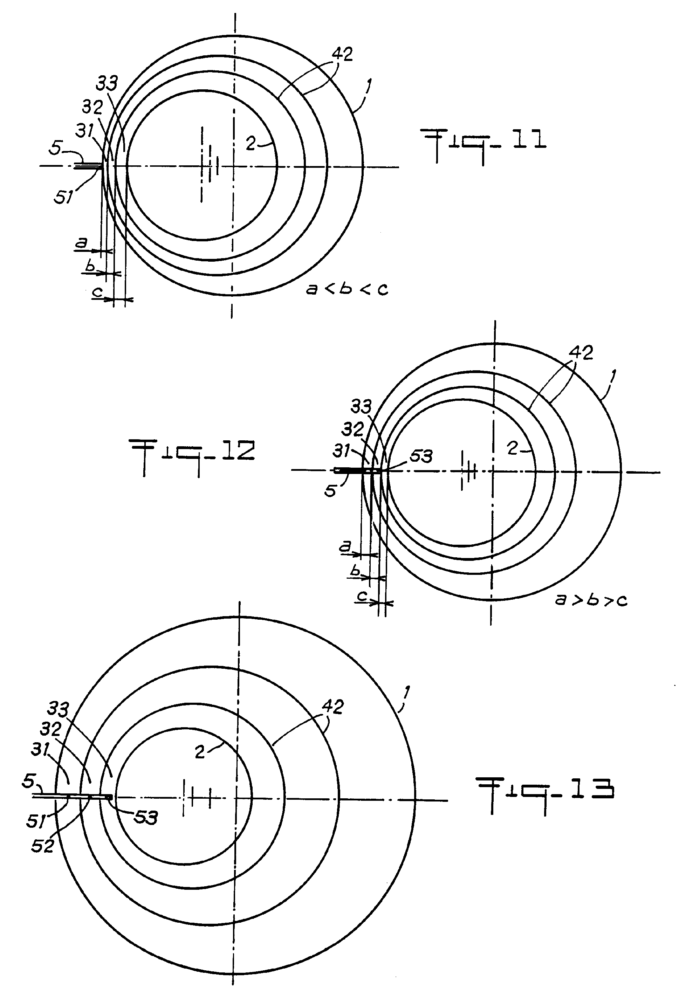

Sans sortir du cadre de l'invention, un réservoir selon l'un des modes de réalisation qui viennent d'être décrits peut être équipé d'un dispositif d'expulsion de liquide ou DEL 4 comme représenté par exemple sur les figures 6A, 6B, 7A, 7B, 8A; 8B.

Deux premières formes de DEL sont montrées sur les figures 6A et 6B :

La demi-coupe supérieure de la figure 6A montre un DEL réalisé sous forme de tôles perforées 41 régulièrement espacées et orientées radialement vis-à-vis de l'axe (ou d'un axe) de symétrie du premier élément de coque 1. Ces tôles sont fixées entre les deux éléments de coque, dans la zone de quasi-tangence 3 où se confine le liquide et s'élèvent sur une fraction seulement de la hauteur du réservoir. Elles viennent donc renforcer l'effet de capillarité dû à la géométrie du réservoir, ce qui constitue une amélioration notable vis-à-vis des réservoirs équipés de DEL mais dont la forme même ne contribue pas au confinement des liquides.

La demi-coupe inférieure de la figure 6B représente un mode de réalisation assez proche du précédent puisque la seule différence réside dans l'écartement mutuel des tôles perforées 41, écartement non plus constant mais variable. Plus précisément, l'écartement diminue de la même façon que diminue l'écart entre les première et deuxième coques. Dans les deux cas précités, l'élément de soutirage 5 sera fixé de préférence dans la zone où l'effet capillaire est le plus grand c'est-à-dire où les tôles sont le plus rapprochées.

De façon avantageuse, les diamètres des trous dans les tôles radiales 41 sont de plus en plus petits à mesure que l'on s'approche de l'élément de soutirage 5.

Les figures 9A, 9B, 9C et 10A, 10B aident à comprendre le fonctionnement des deux dispositifs d'expulsion de liquide qui viennent d'être décrits.

En fin de vie, c'est-à-dire lorsque la masse de liquide 7 est peu importante dans le réservoir, le liquide 7 ne recouvre plus complètement les compartiments 61, 62, 63 réalisés entre les tôles radiales 41, et en particulier le compartiment 61 dans lequel l'écartement entre tôles est le plus petit, de sorte que ce compartiment 61 va se vider en premier. La vidange doit d'ailleurs être attentivement surveillée car il ne faut en aucun cas vider complètement le compartiment 61, pour éviter toute sortie de gaz par le conduit de soutirage 5. Le niveau représenté sur la figure 9A est le niveau minimal autorisé.

En l'absence de pesanteur, le compartiment 61 va se remplir en premier (Fig 9B) en puisant dans le compartiment adjacent 62 lui-même puisera dans le compartiment suivant 63. Ceci est dû au fait que le ménisque constitué par le compartiment 61 possède un pouvoir capillaire Δₚ₁ supérieur à celui Δₚ₂ du compartiment 62 du fait que la distance entre les parois 41 est plus petite et donc la courbure locale du ménisque est plus grande. Le même phénomène existera entre les compartiments 62 et 63 ; jusqu'à ce que l'on arrive à l'équilibre final représenté sur la figure 9C. La vitesse de re-remplissage est liée aux pertes de charge du liquide 7 à travers les trous 44 percés dans les tôles 41.

Les figures 10A et 10B permettent d'expliquer le phénomène de re-remplissage du compartiment 61 relié à la conduite de soutirage 5 dans le cas où les tôles 41 sont équidistantes. La loi physique qui s'applique ici est bien entendu la même que dans le cas précédent à cette différence près que l'existence d'un effet capillaire plus important dans le compartiment 61 vient du fait que c'est la longueur La, Lb, Lc... entre coques 1, 2, mesurée radialement, qui diminue à mesure que l'on s'approche du conduit de soutirage 5 à travers les compartiments 64, 63, 62, 61. La courbure locale du ménisque dans le compartiment 61 est donc plus forte que dans le compartiment 62, elle-même plus forte que celle du compartiment 63 ...

Selon un autre mode de réalisation de l'invention, représenté sur les figures 7A et 7B, le dispositif d'expulsion de liquide DEL est constitué de tôles perforées "circonférentielles" 42 c'est-à-dire orientées sensiblement parallèlement aux éléments de coque dans la zone de tangence 3.

Comme il apparait sur la demi-coupe supérieure de la figure 7A, les tôles perforées 42 peuvent être discontinues. Mais elles peuvent aussi être continues comme représenté sur la demi-coupe inférieure de la figure 7B. Ces tôles 42 sont décentrées de telle façon que la distance inter-tôle ou coque-tôle diminue à l'approche du conduit de soutirage 5. Celui-ci débouchera dans celui des compartiments 31 à 33 où la force capillaire est la plus grande, c'est-à-dire dans le compartiment par exemple 31 ayant la plus petite longueur mesurée radialement de manière à avoir une courbure maximale donc un effet capillaire prépondérant.

Le conduit de soutirage 5 pourra donc déboucher en un point 53 près de la coque interne 2 (fig 12) ou en un point 51 près de la coque externe 1, (fig 11) selon la conception du DEL.

Le même principe physique que celui exposé pour le cas du DEL à tôles radiales s'applique ici. En conséquence, en fin de vidage du réservoir, le compartiment dans lequel débouche le conduit de soutirage 5, qui est celui où les ménisques ont la plus grande force capillaire, se videra le premier. Naturellement, dans un fonctionnement sous accélération due aux moteurs de l'engin équipé du réservoir, il faut arrêter la vidange avant de vider complètement le dernier compartiment afin d'éviter une sortie de gaz. En apesanteur, la plus grande force capillaire va permettre un re-remplissage progressif du compartiment correspondant, c'est-à-dire du compartiment le plus vide.

Sans sortir du cadre de l'invention, il est proposé un DEL combinant les modes de réalisations qui viennent d'être exposés, c'est-à-dire constitué à la fois de tôles perforées radiales 41 (équidistantes ou à écartement variable) et de tôles perforées circonférentielles 42. Un exemple de réalisation est donné par les figures 8A et 8B qui montrent en partie supérieure (figure 8A) destôles radiales 41 à écartement constant, et en partie inférieure (figure 8B) des tôles 41 de plus en plus rapprochées à mesure que l'on s'approche du conduit de soutirage 5, une tôle circonférentielle perforée 42 étant en outre interposée entre les coques 1 et 2.

Comme représenté à titre d'exemple sur la figure 3, une tôle perforée supplémentaire 43 peut être placée localement au-dessus du quadrillage constitué des tôles perforées 41 et 42 de façon à déterminer un volume V auquel est relié le conduit de soutirage 5. Ce volume V fait office de tampon. En d'autres termes, ce volume est utilisable pour le prélèvement de liquide, mais il faut attendre ensuite sa réalimentation en phase de quasi apesanteur pour pouvoir utiliser une nouvelle utilisation.

Enfin, le conduit de soutirage peut, lorsque le DEL est constitué de plusieurs compartiments 31, 32, 33, être percé de plusieurs trous calibrés 51, 52, 53 débouchant dans tous les compartiments 31, 32, 33 (figure 13) ou quelques uns des compartiments 31, 32, 33. De façon avantageuse, le trou de plus grand diamètre 53 débouchera dans le compartiment 33 dans lequel le puisage a lieu en premier, et inversement le trou le plus petit 51 dans le compartiment 31 où l'on souhaite puiser en dernier. Les diamètres des orifices 53, 52, 51 du conduit de soutirage 5 sont ainsi décroissants selon l'ordre de puisage du liquide dans les différents compartiments 33, 32, 31.

Les figures 14 et 15 montrent l'encombrement réduit d'un ensemble de deux réservoirs dont l'un au moins est conforme à l'invention, c'est à dire comprend un premier élément de coque externe 1 concave du côté du liquide et un second élément de coque externe 2 convexe du côté du liquide.

Il est souvent nécessaire de disposer côte à côte plusieurs réservoirs de liquides et de gaz, comme par exemple dans le cas d'un moteur biliquide où il convient de placer les deux ergols dans deux réservoirs différents. Les réservoirs classiques par exemple de forme sphérique, conduisant alors à l'occupation d'un volume important.

Avec des réservoirs selon la présente invention notamment avec des réservoirs tels que ceux représentés sur les figures 2, 4, 5A, 5B, il est possible d'obtenir un agencement compact en imbriquant deux ou plusieurs réservoirs les uns au dessus des autres.

Sur la figure 14, on a ainsi représenté deux réservoirs A, A' correspondant au mode de réalisation de la figure 2. Le réservoir A', qui est identique au réservoir A et comporte des éléments dont les numéros de référence sont primés, présente une coque externe 1', dont la concavité est tournée vers le fluide du réservoir A', qui est imbriquée dans le réservoir A et se trouve située sous la coque interne 2 du réservoir A, dont la convexité est tournée vers le liquide. Des dispositions compactes similaires peuvent être obtenues avec par exemple des réservoirs de forme toroïdale.

La figure 15 montre l'association d'un réservoir A conforme à l'invention et présentant un élément de soutirage 5 avec un réservoir B présentant un élément de soutirage 5'. Dans ce cas, le réservoir B présente cependant une forme sphérique classique et peut être équipé d'un DEL. Le gain en encombrement est dû au fait que la coque sphérique du réservoir B peut venir se loger à l'intérieur de la coque interne 2 du réservoir A, dont la convexité est tournée vers le liquide contenu dans le réservoir A.

## Revendications

1. Réservoir de liquides et de gaz destiné à fonctionner notamment dans des satellites soumis à de faibles accélérations, et utilisant la force de séparation produite par la tension superficielle pour collecter le liquide (7) dans une zone privilégiée (3) du réservoir sans autoriser la sortie de gaz par cette zone,
caractérisé en ce qu'il comprend :
- un premier élément de coque externe (1) présentant une forme régulière sans ligne ni point anguleux et comprenant à une extrémité une portion de surface S de rayon de courbure r ayant une forme concave du côté du liquide,
- un second élément de coque interne (2) solidaire dudit premier élément (1), ayant une forme convexe du côté du liquide, présentant une forme régulière sans ligne ni point anguleux et comprenant une portion de surface S' dont une partie se trouve proche de la tangence avec la portion de la surface S dans ladite zone privilégiée (3) qui constitue la zone globalement la plus étroite comprise entre les portions de surface S et S', la portion de surface S' présentant un rayon de courbure r' qui est inférieur au rayon de courbure r au moins au niveau de ladite zone (3) la plus étroite et,
- au moins un élément (5) de soutirage du liquide débouchant dans ladite zone (3) la plus étroite comprise entre les portions de surface S et S', de sorte que le liquide, par un effet capillaire de coque est confiné dans ladite zone (3) la plus étroite entre les premier et second éléments de coque (1, 2).

2. Réservoir selon la revendication 1, caractérisé en ce que ledit second élément de coque (2) est réalisé à partir d'une forme hémisphérique.

3. Réservoir selon la revendication 1, caractérisé en ce que ledit second élément de coque (2) est réalisé à partir d'une forme ellipsoïdale.

4. Réservoir selon la revendication 1, caractérisé en ce qu'il est de forme générale torique.

5. Réservoir selon l'une des revendications précédentes, caractérisé en ce qu'il comporte en outre un dispositif d'expulsion de liquide (4) placé au voisinage de l'élément de soutirage (5) dans ladite zone (3) la plus étroite.

6. Réservoir selon la revendication 5, caractérisé en ce que ledit dispositif d'expulsion de liquide (4) est constitué de tôles (41) perforées orientées radialement.

7. Réservoir selon la revendication 6, caractérisé en ce que lesdites tôles radiales (41) sont équidistantes les unes des autres.

8. Réservoir selon la revendication 6, caractérisé en ce que les tôles radiales (41) sont de plus en plus rapprochées à mesure que l'on approche de l'élément de soutirage (5).

9. Réservoir selon la revendication 5 ou la revendication 6, caractérisé en ce que ledit dispositif d'expulsion de liquide (4) comprend au moins une tôle (42) perforée circonférentielle orientée sensiblement parallèlement auxdites portions de surface S et S' dans ladite zone (3) de quasi tangence des surfaces.

10. Réservoir selon la revendication 9, caractérisé en ce que chaque tôle circonférentielle (42) située à une distance donnée de l'une ou l'autre des portions de surface S,S' est monobloc.

11. Réservoir selon la revendication 9, caractérisé en ce que chaque tôle circonférentielle (42), située à une distance donnée de l'une ou l'autre des coques (1, 2), est réalisée en plusieurs parties.

12. Réservoir selon l'une quelconque des revendications 5, 9 à 11, caractérisé en ce que lesdites tôles radiales (41) et circonférentielles (42) sont placées de telle sorte que les distances entre tôles dans ladite zone (3) de quasi tangence des surfaces diminue à mesure que l'on s'approche du point de puisage de l'élément de soutirage (5).

13. Réservoir selon l'une des revendications 6 à 8, caractérisé en ce que lesdites tôles (41) sont percées de trous (44) dont les diamètres varient dans le même sens que la distance de la tôle (41) au conduit de soutirage (5).

14. Réservoir selon les revendications 6 et 9, caractérisé en ce qu'une tôle perforée supplémentaire (43) est placée en limite du quadrillage formé par lesdites tôles radiales (41) et lesdites tôles circonférentielles (42) afin de définir un volume tampon à l'intérieur duquel débouche l'élément de soutirage (5).

15. Réservoir selon l'une quelconque des revendications 8 à 14, caractérisé en ce que l'élément de soutirage (5) placé dans une zone où l'effet de coin est prédominant débouche dans le compartiment (31, 33, 61), défini par au moins une tôle perforée radiale (41) ou circonférentielle (42) et au moins l'une des portions de surface S et S', dans lequel la force capillaire est la plus importante.

16. Réservoir selon l'une quelconque des revendications 9 à 12, caractérisé en ce que l'élément de soutirage (5) est muni de plusieurs orifices calibrés (51, 52, 53) de diamètres différents les uns des autres, débouchant respectivement dans les différents compartiments (31, 32, 33) délimités par lesdites tôles circonférentielles (42), les diamètres des orifices (53, 52, 51) étant décroissants selon l'ordre de puisage du liquide dans les différents compartiments (33, 32, 31).

17. Ensemble de réservoirs selon l'une quelconque des revendications 1 à 16, caractérisé en ce que les différents réservoirs (A,A') sont imbriqués les uns dans les autres, le premier élément de coque externe (1') de l'un (A') des réservoirs étant situé au voisinage immédiat du second élément de coque interne (2) d'un autre réservoir (A) dudit ensemble de réservoirs (A,A').

## Patentansprüche

1. Behälter für Flüssigkeiten und Gase zur Verwendung insbesondere in Satelliten unter geringer Beschleunigung, bei dem die durch die Oberflächenspannung erzeugte Trennkraft genutzt wird, um die Flüssigkeit (7) in einem bevorzugten Bereich (3) des Behälters zu sammeln, ohne das Austreten von Gas über diesen Bereich zuzulassen,
**gekennzeichnet** durch:
- ein erstes, äußeres Schalenelement (1), das eine regelmäßige Form ohne Ecke und Kante aufweist und an einem Ende einen Oberflächenabschnitt S mit Krümmungsradius r aufweist, der eine auf der Seite der Flüssigkeit konkave Form hat,
- ein zweites, inneres Schalenelement (2), das mit dem ersten Element (1) verbunden ist, eine auf der Seite der Flüssigkeit konvexe Form hat, eine regelmäßige Form ohne Ecke und Kante aufweist und einen Oberflächenabschnitt S' umfaßt, von dem ein Bereich den Oberflächenabschnitt S in dem bevorzugten Bereich (3) nahezu berührt, der den insgesamt engsten zwischen den Oberflächenabschnitten S und S' liegenden Bereich bildet, wobei der Oberflächenabschnitt S' einen Krümmungsradius r' hat, der kleiner ist als der Krümmungsradius r wenigstens in Höhe des engsten Bereichs (3), und
- wenigstens ein Flüssigkeitsentnahmeelement (5), das in den zwischen den Oberflächenabschnitten S und S' liegenden engsten Bereich (3) mündet,
derart, daß die Flüssigkeit durch eine Kapillarwirkung der Schale in dem engsten Bereich (3) zwischen dem ersten und dem zweiten Schalenelement (1, 2) gehalten wird.

2. Behälter nach Anspruch 1,
dadurch gekennzeichnet, daß
das zweite Schalenelement (2) ausgehend von einer Halbkugelform gebildet ist.

3. Behälter nach Anspruch 1,
dadurch gekennzeichnet, daß
das zweite Schalenelement (2) ausgehend von einer ellipsoidischen Form gebildet ist.

4. Behälter nach Anspruch 1,
dadurch gekennzeichnet, daß
er im wesentlichen torusförmig ist.

5. Behälter nach einem der vorhergehenden Ansprüche,
dadurch gekennzeichnet, daß
er zusätzlich eine Flüssigkeitsaustreibvorrichtung (4) umfaßt, die in der Nähe des Entnahmeelements (5) in dem engsten Bereich (3) angebracht ist.

6. Behälter nach Anspruch 5,
dadurch gekennzeichnet, daß
die Flüssigkeitsaustreibvorrichtung (4) aus radial orientierten durchbrochenen Blechen (41) besteht.

7. Behälter nach Anspruch 6,
dadurch gekennzeichnet, daß
die Radialbleche (41) voneinander gleich beabstandet sind.

8. Behälter nach Anspruch 6,
dadurch gekennzeichnet, daß
die radialen Bleche (41) umso näher aneinanderliegen, je kleiner der Abstand zum Entnahmeelement (5) ist,

9. Behälter nach Anspruch 5 oder Anspruch 6,
dadurch gekennzeichnet, daß
die Flüssigkeitsaustreibvorrichtung (4) wenigstens ein umlaufendes durchbrochenes Blech (42) umfaßt, das im wesentlichen parallel zu den Oberflächenabschnitten S und S' im Bereich (3) der Fast-Berührung der Oberflächen orientiert ist.

10. Behälter nach Anspruch 9,
dadurch gekennzeichnet, daß
jedes in einem gegebenen Abstand von einem der beiden Oberflächenabschnitte S, S' angeordnete umlaufende Blech (42) einteilig ist.

11. Behälter nach Anspruch 9,
dadurch gekennzeichnet, daß
jedes in einem gegebenen Abstand von einer der beiden Schalen (1, 2) angeordnete umlaufende Blech (42) aus mehreren Teilen gebildet ist.

12. Behälter nach einem der Ansprüche 5, 9, 10 oder 11,
dadurch gekennzeichnet, daß
die radialen Bleche (41) und die umlaufenden Bleche (42) so angeordnet sind, daß die Abstände zwischen Blechen im Bereich (3) der Fast-Berührung der Oberflächen umso mehr abnimmt, je kleiner der Abstand zum Zapfpunkt des Entnahmeelements (5) ist.

13. Behälter nach einem der Ansprüche 6 bis 8,
dadurch gekennzeichnet, daß
die Bleche (41) mit Löchern (44) versehen sind, deren Durchmesser sich in demselben Sinne ändern wie der Abstand des Blechs (41) von der Entnahmeleitung (5).

14. Behälter nach Ansprüchen 6 und 9,
dadurch gekennzeichnet, daß
ein zusätzliches durchbrochenes Blech (43) am Ende des von den radialen Blechen (41) und den umlaufenden Blechen (42) gebildeten Gitternetzes angeordnet ist, um ein Puffervolumen zu definieren, in dessen Inneres das Entnahmeelement (5) mündet.

15. Behälter nach einem der Ansprüche 8 bis 14,
dadurch gekennzeichnet, daß
das Entnahmeelement (5), das in einem Bereich mit vorherrschendem Winkeleffekt (effet de coin) angeordnet ist, in dasjenige durch wenigstens durch ein radiales oder umlaufendes durchbrochenes Blech (41, 42) und wenigstens einen der Oberflächenbereiche S und S' definierte Fach mündet, in dem die Kapillarkraft am größten ist.

16. Behälter nach einem der Ansprüche 9 bis 12,
dadurch gekennzeichnet, daß
das Entnahmeelement (5) mit mehreren Öffnungen (51, 52, 53) mit gestuften voneinander verschiedenen Durchmessern versehen ist, die jeweils in unterschiedliche Fächer (31, 32, 33) münden, die durch die umlaufenden Bleche (42) getrennt sind, wobei die Durchmesser der Öffnungen (53, 52, 51) in der Reihenfolge des Abzap fens der Flüssigkeit in den unterschiedlichen Fächern (33, 32, 31) abnehmen.

17. Anordnung von Behältern nach einem der Ansprüche 1 bis 16, dadurch gekennzeichnet, daß
die verschiedenen Behälter (A, A') ineinandergeschachtelt sind, wobei das erste äußere Schalenelement (1') des einen Behälters (A') in unmittelbarer Nähe des zweiten, inneren Schalenelements (2) eines anderen Behälters (A) der Behälteranordnung (A, A') liegt.

## Claims

1. Liquid and gas tank for operation, in particular, in satellites subject to low acceleration, and making use of the separation force produced by surface tension to collect the liquid (7) in a privileged zone (3) of the tank without allowing gas to escape via said zone,
characterized in that it comprises:
- an outer first shell element (1) having a regular shape without any angular points or lines and including at one end a surface portion S of radius of curvature r which is concave on the liquid side,
- an inner second shell element (2) fixed to said first element (1), being convex in shape on the liquid side and regular in shape without any angular points or lines and including a surface portion S' having a part which is close to being tangential to the surface portion S in said privileged zone (3) which constitutes the narrowest zone overall between the surface portions S and S', the surface portion S' having a radius of curvature r' which is less than the radius of curvature r, at least in said narrowest zone (3), and
- at least one liquid drawing-off element (5) opening out into said narrowest zone (3) lying between said surface portions S and S' such that the liquid is confined by a shell capillary effect in said narrowest zone (3) between the first and second shell elements (1, 2).

2. Tank according to claim 1, characterized in that said second shell element (2) is made from a hemispherical shape.

3. Tank according to claim 1, characterized in that said second shell element (2) is made from an ellipsoid shape.

4. Tank according to claim 1, characterized in that it is generally toroidal in shape.

5. Tank according to one of the preceding claims, characterized in that it further includes a liquid expulsion device (4) placed in the vicinity of the drawing-off element (5) in said narrowest zone (3).

6. Tank according to claim 5, characterized in that said liquid expulsion device (4) is constituted by perforated sheets (41) extending radially.

7. Tank according to claim 6, characterized in that said radial sheets (41) are equidistant from one another.

8. Tank according to claim 6, characterized in that said radial sheets (41) come closer and closer together on coming closer to the drawing-off element (5).

9. Tank according to claim 5 or claim 6, characterized in that said liquid expulsion device (4) includes at least one circumferential perforated sheet (42) disposed substantially parallel to said surface portions S and S' in said zone (3) where the surfaces are quasi-tangential.

10. Tank according to claim 9, characterized in that each circumferential sheet (42) situated at a given distance from one or other of the surface portions S and S' is a single sheet.

11. Tank according to claim 9, characterized in that each circumferential sheet (42) situated at a given distance from one or other of the shells (1, 2) is made up of a plurality of parts.

12. Tank according to any one of claims 5, 9 to 11, characterized in that said radial sheets (41) and said circumferential sheets (42) are disposed in such a manner that the distances between the sheets in said zone (3) where the surfaces are quasi-tangential diminish on approaching the drawing-off point of the drawing-off element (5).

13. Tank according to one of claims 6 to 8, characterized in that said sheets (41) are pierced by holes (44) whose diameters vary in the same direction as the distance between the sheet (41) and the drawing-off duct (5).

14. Tank according to claims 6 and 9, characterized in that an additional perforated sheet (43) is placed at the edge of the grid constituted by said radial sheets (41) and said circumferential sheets (42) in order to define a buffer volume within which the drawing-off element (5) opens out.

15. Tank according to any one of claims 8 to 14, characterized in that the drawing-off element (5) placed in a zone where the corner effect is predominant opens out into the compartment (31, 33, 61) defined by at least one radial perforated sheet (41) or one circumferential perforated sheet (42) and by at least one of the surface portions S and S', in which compartment capillary force is at a maximum.

16. Tank according to any one of claims 9 to 12, characterized in that the drawing-off element (5) is provided with a plurality of calibrated orifices (51, 52, 53) of different diameters from one another, and opening out into respective different compartments (31, 32, 33) delimited by said circumferential sheets (42), the diameters of the orifices (53, 52, 51) decreasing in liquid drawing-off order from the different compartments (33, 32, 31).

17. Set of tanks according to any one of claims 1 to 16, characterized in that the various tanks (A, A') interfit in one another, with the outer first shell element (1') of one (A') of the tanks being situated in the immediate vicinity of the inner second shell element (2) of another tank (A) of said set of tanks (A, A').
